# EUROPÄISCHE PATENTANMELDUNG

(11) **EP 4 011 987 A1**
(43) Veröffentlichungstag der Anmeldung: **15.06.2022**
(21) Anmeldenummer: 20212945.8
(22) Anmeldetag: 10.12.2020
(51) Int. Cl.: C09D 11/03, C09D 5/00, C09D 17/00

(54) **SALZE VON N,N-DIALKYL-(SULFOOXY)-FETTSÄUREAMIDAT ALS DISPERGIERMITTEL FÜR PIGMENTPRÄPARATIONEN**

(71) Anmelder: Clariant International Ltd, 4132 Muttenz (CH)
(72) Erfinder: AHRENS, Hendrik, 65830 Kriftel (DE)
(74) Vertreter: Mikulecky, Klaus

(57) **Zusammenfassung**

Gegenstand der Erfindung sind wässrige, bindemittelfreie Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens eines Salzes eines N,N-Dialkyl-(sulfooxy)-Fettsäureamids der Formel (1), 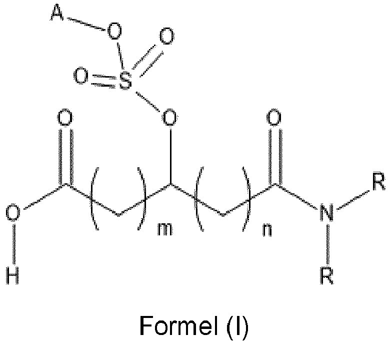 worin
R
ein aliphatischer Kohlenwasserstoffrest mit 1 bis 8 Kohlenstoffatomen,
n
eine ganze Zahl von 0 bis 15,
m
eine ganze Zahl von 0 bis 15,
n + m
eine ganze Zahl von 5 bis 19,
A
ein Wasserstoffatom, ein Element der Erdalkalimetallgruppe oder Ammonium, und

(G) Wasser sind.

## Beschreibung

Gegenstand der vorliegenden Erfindung sind wässrige, bindemittelfreie Pigmentpräparationen, die anionische Fettsäureamidate als Dispergiermittel enthalten, sowie ihre Verwendung zum Färben von makromolekularen Materialien aller Art, wie beispielsweise Fasermaterialien, Papiermassen, Beschichtungsstoffen, Lacken, Farben und ihre Verwendung zum Bedrucken von zweidimensionalen Flächengebilden wie beispielsweise Papier, Kartonagen, Kunststoff, Textilien und Leder.

Für das Einfärben von makromolekularen Materialien, insbesondere von Farben und Lacken werden wässrige, bindemittelfreie Pigmentpräparationen mit organischen oder anorganischen Pigmenten hergestellt. Diese Pigmentpräparationen kommen als Abtönpasten in Baumärkten und Malerfachgeschäften zum Einsatz und werden mit Hilfe von Dosier- und Abtönanlagen wässrigen und lösemittelhaltigen Farben und Lacken zugesetzt, um Kundenwünschen entsprechende Farbtöne einzustellen. Üblicherweise enthalten Abtönpasten Pigmentkonzentrationen in einem breiten Konzentrationsbereich von 1 bis 75 Massen-%.

Obwohl nach dem Stand der Technik eine Vielzahl von Verbindungen als geeignete Netz- und Dispergiermittel vorgeschlagen werden, fehlt es in der Praxis immer wieder an effektiven Dispergiermitteln für Pigmentdispersionen, die den Anforderungen an Sedimentationsstabilität, rheologisches Verhalten, Farbausbeute der Pigmente und an ein geringes human- und ökotoxikologisches Verhalten genügen. Darüber hinaus schränken Vergaberichtlinien für Umweltsiegel die Verwendung bekannter Netz- und Dispergierhilfsmittel ein, so dass der Fachmann immer wieder auf der Suche nach neuen Dispergiermitteln und Kombinationen ist, um flüssige, stabile, wässrige Pigmentpräparationen herzustellen.

WO2013104406 lehrt Pigmentpräparationen, enthaltend 0,01 bis 15 Gew.-% mindestens eines Fettsäureethanolamidethoxylates, welches einen linearen oder verzweigter Alkyl- oder Alkenylrest mit 7 bis 21 Kohlenstoffatomen und 2 bis 40 Alkoxygruppen umfasst. Die in WO2013104406 beschriebene Kombination von Fettaminen mit nichtionischen Tensiden und insbesondere Fettsäureamidethoxylaten eignet sich nur für anorganische Pigmente und ist für organische Pigmente ungeeignet.

Der vorliegenden Erfindung lag die Aufgabe zugrunde, stabile und fließfähige, Alkylphenol-freie wässrige Pigmentpräparationen herzustellen, die über einen längeren Zeitraum keine Sedimentation der verwendeten Pigmente aufzeigen, und mit denen sich wässrige und lösemittelhaltige Farben, Lacke und Lasuren gleichermaßen einfärben lassen. Beim Abtönen von wässrigen Lacken und Farben, insbesondere Dispersionsfarben, Silikatdispersionsfarben und wässrigen Silikonharzfarben sollten die erfindungsgemäßen Pigmentpräparationen keine Rubout-Probleme zeigen.

Weiterhin sollen die wässrigen Pigmentpräparationen auch mit lösemittelhaltigen Lacken kompatibel sein, sich homogen durch Mischen, Rühren oder Schütteln im Lack verteilen lassen und bei Streiche oder Rolle auf Oberflächen ein ruhiges, gleichmäßiges Farbbild ergeben. Auch für die Kompatibilität der wässrigen Pigmentpräparationen dient der Rubout-Test, der in der in US-3840383 beschriebenen Weise durchgeführt wird.

Um die Kompatibilität der wässrigen Pigmentpräparationen für eine möglichst große Anzahl von Lacken und Farben zu ermöglichen, soll ferner auf die Verwendung von Bindemitteln bei der Herstellung der erfindungsgemäßen Pigmentpräparationen verzichtet werden.

Eine weitere Aufgabe der Erfindung war es, wässrige Pigmentpräparationen mit geringem humantoxikologischem Potenzial und geringer Umweltgefährdung bereit zu stellen. Leicht flüchtige organische Verbindungen mit einem Siedepunkt von < 250 °C (VOC Gehalte) sollen den wässrigen Pigmentpräparationen nicht explizit zugesetzt werden und nur in geringen Mengen in Form von nicht umgesetzten Syntheserohstoffe oder als Nebenreaktionsprodukten enthalten sein.

Überraschenderweise wurde gefunden, dass Mischungen, die anionische Fettsäureamidate der Formel I enthalten, diese Aufgabe erfüllen.

Gegenstand der Erfindung sind daher wässrige, bindemittelfreie Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens eines Salzes eines N,N-Dialkyl-(sulfooxy)-Fettsäureamidats der Formel (I), 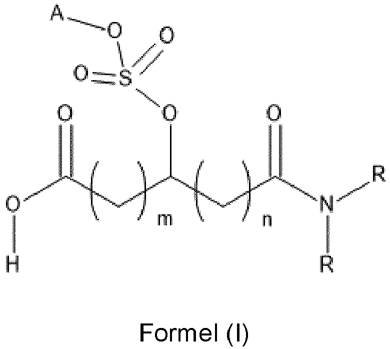 worin
   - R: ein aliphatischer Kohlenwasserstoffrest mit 1 bis 8 Kohlenstoffatomen,
   - n: eine ganze Zahl von 0 bis 15,
   - m: eine ganze Zahl von 0 bis 15,
   - n + m: eine ganze Zahl von 5 bis 19,
   - A: ein Wasserstoffatom, ein Element der Erdalkalimetallgruppe oder Ammonium, und G Wasser sind.

Die erfindungsgemäße Pigmentpräparation kann darüber hinaus gegebenenfalls einen oder mehrere der folgenden Bestandteile umfassen:
(C) 0, vorzugsweise 0,01 bis 12,0 Gew.-% eines nichtionischen Tensides,
(D) 0, vorzugsweise 0,01 bis 8,0 Gew.-% Tonmineralverdicker ausgewählt aus natürlichen oder alkalisch aktivierten Schichtsilikatmineralien,
(E) 0, vorzugsweise 0,01 bis 20,0 Gew.-% anorganische Füllstoffe, und/oder
(F) 0, vorzugsweise 0,01 bis 30 Gew.-% weitere, für die Herstellung von wässrigen Pigmentpräparationen übliche Hilfsmittel wie zusätzliche Netzmittel, Entschäumer, Rheologieadditive, Konservierungsmittel, Puffersubstanzen und pH-Regulatoren

Die erfindungsgemäßen Pigmentpräparationen sind scherbeständig, eintrockenbeständig, lagerbeständig, schäumen bei der Applikation nicht oder nur wenig und verfügen über eine hervorragende Rheologie.

Die erfindungsgemäßen Pigmentpräparationen sind bindemittelfrei. Bindemittel im Sinne dieser Erfindung sind Polymere oder Harze, die in einem geeigneten Lösemittel gelöst oder dispergiert sind und physikalisch, chemisch, thermisch, oxidativ oder strahlengehärtet trocknen. Während des Trocknungsvorgangs verfilmen die Polymere oder Harze und binden so die verwendeten Pigmente und Füllstoffe eines Beschichtungsstoffes. Da Bindemittel auch über dispergierende Eigenschaften verfügen, verwendet man sie gerne in Kombination mit niedermolekularen Netz- und Dispergiermitteln für die Herstellung von Pigmentpräparationen. Nachteil der Verwendung eines Bindemittels für die Herstellung von Pigmentpräparationen ist Einschränkung der Verwendbarkeit der Pigmentpräparation, die mit einer möglichst großen Anzahl verschiedener Lacke und Farbe und den darin enthaltenen Bindemitteln verträglich sein sollen.

Die Komponente (A) der erfindungsgemäßen Pigmentpräparationen ist vorzugsweise ein feinteiliges, organisches oder anorganisches Weiß- oder Buntpigment oder ein Gemisch verschiedener solcher Pigmente.

Als beispielhafte Auswahl besonders bevorzugter organischer Pigmente sind dabei Rußpigmente, wie z. B. Gas- oder Furnaceruße; Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Die Komponente (B) der erfindungsgemäßen Pigmentpräparationen ist ein Salz eines N,N-Dialkyl-(sulfooxy)-Fettsäureamidats der Formel I

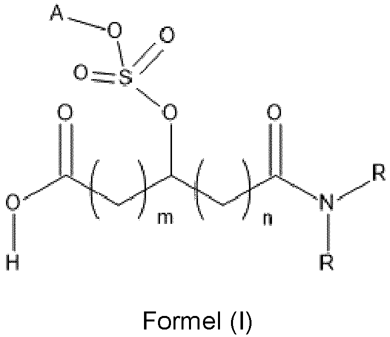

Die Salze der N,N-Dialkyl-(sulfooxy)-Fettsäureamidate der Formel (I) sind sulfatierte Alkenylcarbonsäure oder sulfonierte Fettsäurederivate.

R kann linear oder verzweigt, gesättigt oder ungesättigt sein. R ist vorzugsweise eine Alkylgruppe mit 1 bis 8 Kohlenstoffatomen oder eine Alkenylgruppe mit 2 bis 8 Kohlenstoffatomen, besonders bevorzugt ist R ein Methyl-, Ethyl-, Propyl- oder Butylrest.

n und m sind ganze Zahlen von 0 bis 15, wobei die Summe n + m eine ganze Zahl von 5 bis 19 ergibt. Bevorzugt ist die Summe n + m gleich 15. In einer bevorzugten Ausführungsform ist n eine ganze Zahl von 1 bis 15. In einer weiteren bevorzugten Ausführungsform ist m eine ganze Zahl von 1 bis 15.

A ist Wasserstoff, ein Element der Alkalimetallgruppe oder Ammonium (NH₄⁺), bevorzugt Natrium. Bevorzugt werden Salze der 18-(Dialkyl)-18-oxo-9-sulfooxyoctadecanamidate und besonders bevorzugt Salze des 18-(Dibutyl)-18-oxo-9-sulfooxyoctadecanamidats. In einer weiteren bevorzugten Form der Erfindung wird das Natriumhydrogen-N,N-dibutyl-10-(sulfonatooxy)octadecanamidat verwendet. Das Natriumhydrogen-N,N-dibutyl-10-(sulfonatooxy)octadecanamidat wird handelsüblich in wässriger Lösung dargereicht. Eine Darreichungsform des Natriumhydrogen-N,N-dibutyl-10-(sulfonatooxy)octadecanamidates ist Humectol^{®} C fl hoko mit einer Konzentration von 35 - 45 % in Wasser.

Die Komponente (C) der erfindungsgemäßen Pigmentpräparationen ist ein nichtionisches Tensid. Es ist vorzugsweise ausgewählt aus der Gruppe der

Fettalkoholalkoxylate, insbesondere Fettalkoholethoxylate,
Fettsäurederivate, insbesondere Fettsäureethoxylate und Fettsäurealkanolamidethoxylate,
Zuckertenside, insbesondere Alkylpolyglycoside und Polyhydroxyfettsäureamide, speziell Alkylglucamide.

Der Begriff Fettsäure oder Fettalkohol bedeutet hierin eine aliphatische organische Säure oder einen aliphatischen organischen Alkohol mit 8 bis 22 Kohlenstoffatomen.

Geeignete nichtionische Tenside sind Fettalkoholethoxylate der Formel (II), 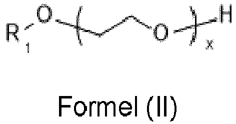 worin
- R₁: ein linearer oder verzweigter, gesättigter oder ungesättigter C₈ bis C₂₂-aliphatischer Kohlenwasserstoffrest,
- x: eine ganze Zahl von 1 bis 100 darstellt.

Für die Herstellung der Fettalkoholethoxylate sind Fettalkohole mit 8 bis 22 Kohlenstoffatomen natürlicher Herkunft wie Octylalkohol, Decylalkohol, Laurylalkohol, Myristylalkohol, Cetylalkohol, Palmitinol, Stearylalkohol, Eicosanol, Behenylalkohol, Oleylalkohol, Linolalkohol, Linolenol, Ricinolalkohol oder Mischungen von C₈- bis C₂₂-Kettenschnitten, wie beispielswiese Cocosfettalkohol und Palmkernölalkohol geeignet. Weiterhin sind synthetische primäre Alkohole wie iso-C₁₃-Oxoalkohole, C₁₃/C₁₅-Oxoalkohole, Mischungen linearer, einfach verzweigter oder mehrfach verzweigter Oxoalkohole mit einer mittleren C-Kettenlänge von 10 bis 15 Kohlenstoffatomen, Ziegleralkohole mit 8 bis 22 Kohlenstoffatomen und Guerbetalkohole mit 10, 12, 14, 16 oder 18 Kohlenstoffatomen und lineare und verzweigte, sekundäre Alkanole mit 6 bis 22 Kohlenstoffatomen geeignet. Die verwendeten Alkohole können gesättigt und ungesättigt vorliegen. Die Fettalkohole werden in an sich bekannter Weise mit Hilfe von alkalischen oder sauren Katalysatoren mit Ethylenoxid umgesetzt. Der mittlere Ethoxylierungsgrad der Alkohole beträgt 1 bis 100 Mol Ethylenoxid, bevorzugt 3 bis 50 und besonders bevorzugt 5 bis 30 Mol Ethylenoxid.

Weitere geeignete nichtionische Tenside sind Fettalkoholalkoxylate der Formel (III), 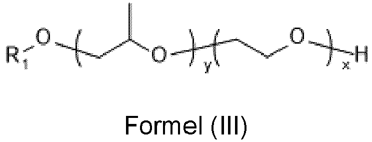 worin
- R₁: ein linearer oder verzweigter, gesättigter oder ungesättigter C₈ bis C₂₂-aliphatischer Kohlenwasserstoffrest, und
- x und y: unabhängig voneinander eine ganze Zahl von 1 bis 100 sind.

Geeignete Fettalkoholalkoxylate werden durch blockweise Anlagerung von Propylenoxid und Ethylenoxid an Alkohole R₁-OH hergestellt. Vorzugsweise werden die Alkohole zunächst mit Propylenoxid und anschließend mit Ethylenoxid umgesetzt.

Weitere geeignete nichtionische Tenside sind Fettsäureethanolamidethoxylate der Formel IV, 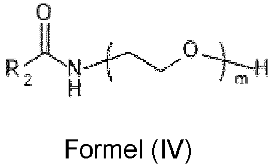 worin
- R₂: ein linearer oder verzweigter, gesättigter oder ungesättigter C₇ bis C₁₇-aliphatischer Kohlenwasserstoffrest, und
- m: eine ganze Zahl von 2 bis 100 darstellt.

Die ethoxylierten Fettsäureethanolamide der Komponente (C) werden vorzugsweise durch Umsetzen von Fettsäuren mit Ethanolamin zum Fettsäureethanolamid und anschließender Anlagerung von Ethylenoxid mittels alkalischer Katalysatoren wie Natrium- oder Kaliummethylat hergestellt. R₂ ist vorzugsweise eine Alkyl- oder Alkenylgruppe mit 7 bis 17 Kohlenstoffatomen, wobei auch mehr als eine Doppelbindung enthalten sein kann. m ist vorzugsweise mindestens gleich 3, insbesondere mindestens gleich 4.

Eine weitere besonders bevorzugte Gruppe der nichtionischen Tenside für die Komponente (C) sind Alkyl- und/oder Alkenyloligoglykoside der Formel (V), 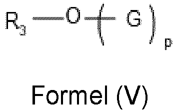 in der R₃ für einen Alkyl- und/oder Alkenylrest mit 6 bis 22 Kohlenstoffatom, G für einen Zuckerrest mit 5 oder 6 Kohlenstoffatomen und p für eine Zahl von 1 bis 10 steht. Insbesondere kann Komponente (C) ein C₁₂/C₁₄-Kokosalkyloligoglucosid sein.

Eine weitere besonders bevorzugte Gruppe der nichtionischen Tenside für die Komponente (C) sind Polyhydroxyfettsäureamide der Formel (VI), 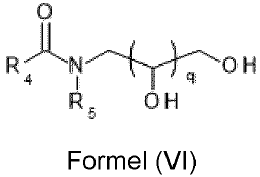 worin R₄CO für einen Acylrest mit 8 bis 22 Kohlenstoffatomen, bevorzugt 10 bis 20 Kohlenstoffatomen steht. Insbesondere steht R₄CO für den Acylrest der Capronsäure, Caprylsäure, Caprinsäure, Laurinsäure, Myristinsäure, Palmitinsäure, Palmoleinsäure, Stearinsäure, Isostearinsäure, Ölsäure, Elaidinsäure, Petroselinsäure, Linolsäure, Linolensäure, Arachinsäure, Gadoleinsäure, Behensäure oder Erucasäure bzw. derer technischen Mischungen steht.

R₅ steht für ein Wasserstoffatom oder für eine C₁ bis C₄-Alkylgruppe

q steht für 3 oder 4.

Vorzugsweise leiten sich die Polyhydroxyfettsäureamide von reduzierenden Zuckern mit 5 oder 6 Kohlenstoffatomen, insbesondere von der Glucose ab und stellen dann Fettsäure-N-alkylglucamide dar. Besonders bevorzugt sind Fettsäure-N-alkylglucamide der Formel (IV), die durch reduktive Aminierung von Glucose mit Methylamin und anschließende Acylierung mit C₈/C₁₀-Fettsäuremischungen, Laurinsäure oder C₁₂/C₁₄-Kokosfettsäure bzw. einem entsprechenden Derivat, beispielsweise deren Alkylester, erhalten werden.

Weitere geeignete nichtionische Tenside sind Veresterungsprodukte von Polyethylenglykol mit einem mittleren Molekulargewicht von 200 bis 8000 g/mol mit natürlichen Fettsäuren, sowie ethoxylierte Fettsäuresorbitanester, Rizinusöl, Fettsäureglycerinester und Fettsäurepolyglycerinester.

Die Komponente (D) ist ein Tonmineralverdicker auf Basis von natürlichen oder alkalisch aktivierten Schichtsilikatmineralien. Montmorrilonit ist der wesentliche Bestandteil von Bentonit und besitzt ein hohes lonenaustauschvermögen. Weitere Schichtsilikate sind Smektit und Sepiolith.

Bei Zugabe von Wasser dehnt sich das Mineral um ein Vielfaches der Ursprungsgröße aus, wodurch die sich die Viskosität der wässrigen Dispersion erhöht. Montmorrilonit als Tonmineralverdicker und andere quellfähigen Schichtsilikate können der erfindungsgemäßen Pigmentpräparation zugesetzt werden, um das Absetzen von organischen und anorganischen Pigmenten und Füllstoffen und die Synerese, das heißt die Bildung einer zweiten Phase mit unterschiedlicher Zusammensetzung zu verlangsamen oder zu verhindern.

Die Komponente (E) ist ein anorganischer Füllstoff, der den erfindungsgemäßen Pigmentpräparationen zugesetzt werden kann, um deren Dichte zu erhöhen und das Fließverhalten zu verändern. Bei volumetrischer Dosierung und geringer Pigmentkonzentration oder leichten organischen Pigmenten kann es möglich sein, dass sich die Pigmentpräparation in den Dosiergeräten nur schlecht dosieren lässt, weil die Gravitationskraft nicht ausreicht, um die flüssige Pigmentpräparation in das Farbengebinde zu entleeren. In anderen Fällen ist die Viskosität der Pigmentpräparationen bei niedrigen Pigmentkonzentrationen zu niedrig, was zu einem Nachtropfen führt. In beiden Fällen können den erfindungsgemäßen Pigmentpräparationen farblose anorganische Füllstoffe zugesetzt werden, um die Dichte der Pigmentpräparation zu erhöhen und das Fließverhalten zu verbessern. Geeignete Füllstoffe sind Calciumcarbonate wie natürlich vorkommende Kreide und gefälltes Calciumcarbonat, Dolomit, natürliches Siliciumdioxid (Quarzmehl), pyrogene und gefällte Kieselsäuren, Kieselgur, Aluminiumoxide, Aluminiumhydroxide, Talkum, Kaolin, Glimmer (Kalium-Aluminium-Silikat-Hydrat), Bariumsulfate wie natürlich vorkommende Schwerspate und gefälltes Blanc Fix.

Die Komponenten (F) sind weitere für die Herstellung von wässrigen Pigmentpräparationen übliche Hilfsmittel wie zusätzliche Netzmittel, Feuchthaltemittel, Lösemittel, Entschäumer, Rheologieadditive, Konservierungsmittel, Puffersubstanzen und pH-Regulatoren.

Zusätzliche Netzmittel können Netzmittel auf Basis von Polysiloxanethern sein, beispielsweise ein Methoxypolyethoxypropyltrisiloxan, Alkindiolethoxylate, Fluortenside sowie kationische und amphotere Tenside. Kationische Tenside können Fettamine, Fettalkylaminopropylamine, Fettaminethoxylate, quaternäre Fettalkylammoniumverbinden, Immidazoliniumverbindungen und Morpholiniumverbindungen sein. Amphotere Tenside können Betaine wie Alkyldimethylcarboxymethylbetain, Amidopropylbetaine und Amphoacetate sein. Eine besonders geeignete Gruppe der amphoteren Tenside sind Lecithin und andere Phosphatide.

Geeignete Feuchthaltemittel und Lösemittel sind vorzugsweise Glykolether, worunter hier Verbindungen mit Ethoxy- und/oder Propoxygruppen verstanden werden, welche mittlere Molmassen zwischen 200 und 20.000 g/mol aufweisen, insbesondere Polyethylenglykolether oder Polypropylenglykolether mit einer mittleren Molmasse zwischen 200 und 20.000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- oder Propylenglykoleinheiten wie beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20.000 g/mol, Pentaerythritolalkoxylate mit einem Molekulargewicht von 200 bis 20.000 g/mol, oder weitere Ethoxylierungs- und Alkoxylierungsprodukte und statistische oder Blockcopolymere die durch Addition von Ethylenoxid und/oder Propylenoxide an ein- und höherwertige Alkohole hergestellt wurden, mit einem Molekulargewicht von 200 bis 20.000 g/mol.

Angaben zu Molekulargewichten von Polymeren beziehen sich stets auf deren zahlenmittleres Molekulargewicht, sofern im Einzelfall nicht anders angegeben. Molekulargewichte sind per GPC gegen Polyethylenglykol als Standard zu bestimmen.

Weitere geeignete Hilfsstoffe der erfindungsgemäßen wässrigen Pigmentpräparationen sind vorzugsweise wasserlösliche organische oder hydrotrope Substanzen, die gegebenenfalls auch als Lösungsmittel dienen.

Besonders geeignet sind beispielsweise Formamid, Harnstoff, Tetramethylharnstoff, ε-Caprolactam, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat.

Geeignete Entschäumer sind vorzugsweise Mineralölentschäumer und deren Emulsionen, Siliconölentschäumer und Siliconölemulsionen, Polyalkylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Geeignete weitere Rheologieadditive als Mittel zur Regulierung der Viskosität sind z. B. Stärke- und Cellulosederivate und hydrophobmodifizierte ethoxylierte Urethane (HEUR)-Verdicker, alkaliquellbare Acrylatverdicker, hydrophob modifizierte Acrylatverdicker, Polymere der Acrylamidomethylpropansulfonsäure oder pyrogene Kieselsäure.

Topfkonservierer werden zur Stabilisierung der wässrigen Pigmentpräparationen und zur Verhinderung der unkontrollierten Vermehrung von Bakterien, Algen und Pilzen zugesetzt. Geeignete Biozide sind Formaldehyd, Formaldehyd abspaltende Verbindungen, Methylisothiazolinon, Chlormethylisothiazolinon, Benzisothiazolinon, Bronopol, Dibromodicyanonbutan und silberchloridbeschichtetes Titandioxid.

Als Puffersubstanzen und pH-Regulatoren kommen vorzugsweise organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, 2-Amino-2-methyl-1-propanol oder Dimethylaminomethylpropanol. Bevorzugte anorganische Basen sind Natrium-, Kalium-, Lithiumhydroxid oder Ammoniak.

Zur Herstellung der erfindungsgemäßen, wässrigen Pigmentpräparationen benutztes Wasser, Komponente (G), wird vorzugsweise in Form von destilliertem oder entsalztem Wasser eingesetzt. Auch Trinkwasser (Leitungswasser) und/oder Wasser natürlichen Ursprungs kann eingesetzt werden. Wasser ist in der erfindungsgemäßen wässrigen Pigmentpräparation vorzugsweise zu 10 bis 75 Gew.-%, insbesondere ad 100 Gew.-% enthalten.

Die erfindungsgemäßen wässrigen Pigmentpräparationen weisen vorzugsweise eine Viskosität von 10 bis 10.000 mPas, bevorzugt 30 bis 5.000 mPas und besonders bevorzugt 50 bis 3.000 mPas auf, gemessen mit einem Kegel-Platte-Viskosimeter bei einer Scherrate von 1/60 sec⁻¹, z. B. einem Haake Viscometer 550 gemessen.

Die erfindungsgemäßen, wässrigen Pigmentpräparationen sind in jedem Verhältnis mit Wasser mischbar, wobei sich auch mehrere unterschiedliche Präparationen mit Wasser mischen lassen. Sie zeichnen sich gegenüber herkömmlichen Pigmentpräparationen durch eine hervorragende Lagerstabilität und gute rheologische Eigenschaften aus.

Gegenstand der vorliegenden Erfindung ist auch ein Verfahren zur Herstellung der erfindungsgemäßen Pigmentpräparationen, indem man die Komponente (A) in Form von Pulver oder Granulat in Gegenwart von Wasser (G) sowie der Komponenten (B), und gegebenenfalls (C), (D), (E) und (F) in an sich üblicher Weise dispergiert, anschließend gegebenenfalls weiteres Wasser (G) zumischt und die erhaltende wässrige Pigmentdispersion mit Wasser auf die gewünschte Konzentration einstellt. Vorzugsweise werden die flüssigen Komponenten (B), (C), (G) und gegebenenfalls (F) vermischt und homogenisiert, dann die festen, pulverförmigen, granulierten oder schuppenförmigen Komponente (A), (D) und (E) und in die vorgelegte Mischung eingerührt, wobei das Pigment und gegebenenfalls die Füllstoffe angeteigt und vordispergiert werden. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser, vorzugsweise entionisiertem oder destilliertem Wasser, weiter verdünnt werden.

Die erfindungsgemäßen Pigmentpräparationen eignen sich zum Pigmentieren und Färben von makromolekularen Materialien aller Art. Besonders eignen sich die erfindungsgemäßen Pigmentpräparation zur Pigmentierung bzw. Herstellung von Anstrich- und Dispersionsfarben, Dispersionslacken, Druckfarben, hierbei beispielsweise Textildruck-, Flexodruck-, Dekordruck- oder Tiefdruckfarben, Tapetenfarben, wasserverdünnbaren Lacken, Holzbeizen, Holzschutzsystemen und Lacken zur Oberflächenbeschichtung von Gegenständen aus beispielsweise Metall, Holz, Kunststoff, Glas, Keramik, Beton, Textilmaterial, Papier oder Kautschuk zur Anwendung kommen.

Eine besondere Eigenschaft der erfindungsgemäßen Pigmentpräparationen ist ihre Verwendung als universale Abtönpasten. Universale Abtönpasten eignen sich sowohl zum Einfärben von wässrigen Farben als auch zum Abtönen von lösemittelhaltigen Lacken. Übliche Dispergiermittel für wässrige Pigmentpräparationen stabilisieren die Pigmente nur in wässrigen, nicht aber in lösemittelhaltigen Systemen. Werden wässrige Pigmentpräparationen zum Einfärben von lösemittelhaltigen Lacken verwendet, kann es zur Agglomeration der Pigmente kommen und zum Aufschwimmen der agglomerierten Pigmente im Lack kommen. Beim Auftragen der Lacke mit Pinsel, Rollen oder durch Sprühapplikation kann es zu Streifigkeit und zu einem unruhigen Farbbild aufgrund von Farbtonunterschieden kommen, weil die Pigmente in der Farbe und während des Trocknungsprozesses flokkulieren, so dass die Farbstärke reduziert wird. Beim Auftrag der eingefärbten Lacke werden die Pigmentagglomerate wieder aufgetrennt, aber unterschiedlich stark, so dass es zu den beobachteten Farbtonunterschieden kommt. Im Labor wird dieses Phänomen im Rubout-Test simuliert, welcher in US-3840383 beschrieben wird.

### Beispiele

### Herstellung einer Pigmentpräparation

Das Pigment wird, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert.

Zur Dispergierung werden die flüssigen Komponenten, das anionische Fettsäureamid Komponente (B), gegebenenfalls weitere nichtionische Dispergiermittel der Komponenten (C) sowie weitere Komponenten (F) in einem Mahlbehälter vorgelegt und vermischt. Anschließend werden die pulverförmigen Komponenten (A) und gegebenenfalls (D) und (E) zugegeben und mit dem Dissolver vordispergiert.

Die anschließende Feindispergierung erfolgt mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgt. Anschließend wird die gewünschte Pigmentendkonzentration mit entionisiertem Wasser eingestellt, die Mahlkörper abgetrennt und die Pigmentpräparation isoliert.

### Prüfung der Lackkompatibilität und der Farbstärke

Die Pigmentpräparation wird eine Woche bei 60 °C gelagert und visuell beurteilt. Die Viskosität der Pigmentpräparation wird bei 25 °C mit einem Haake Viscometer 550 bei einer Scherrate von 1/60 sec⁻¹ oder bei gut fließfähigen Pigmentpräparationen mit einem Brookfield-Viscometer, Model DV-II mit der Spindel 3 bei 100 UpM gemessen. Zur Bestimmung der Farbstärke und der Kompatibilität werden die Pigmentpräparationen jeweils einer wässrigen Dispersionsweißfarbe und einem mineralölhaltigen Langöl-Alkydlack zugesetzt. Für das Ausprüfen der Farbstärke und Kompatibilität werden je 200 g der abgetönten Farben bestehend aus 92 Gew.-% Grundlack und 8 Gew.-% der Pigmentpräparation in eine Blechdose geben und 60 Sekunden in einem Inkshaker 500 der Fa. Olbrich Know-how, Hemer homogenisiert. Die abgetönten Farben werden nach einem Tag auf einem Prüfkarton mit einer 120 µm Rakel auf einem Filmziehgerät, Modell 509 MC der Fa. Erichsen GmbH, Hemer ausgestrichen. An den trocknenden Farbfilmen wird der Rubout-Test wie in der Schrift US-3840383 beschriebenen Weise durchgeführt.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In vorliegender Anmeldung bedeuten "Teile" Gewichtsteile und Prozentangaben Gewichtsprozente, soweit im Einzelfall nichts anders angegeben ist.

### Beispiele für Pigmentpräparationen

### Beispiel 1

| | | |
|---|---|---|
| 65,0 | Teile | C.I. Pigment Yellow 42 (Bayferrox^{®} 3920, Fa. Lanxess, Komponente (A)), |
| 5,0 | Teile | Natriumhydrogen-N,N-dibutyl-10-(sulfonatooxy)octadecanamidat in wässriger Lösung (Humectol^{®} C fl hoko, Fa. Archroma, (Komponente (B)), |
| 5,0 | Teile | Fettsäurealkanolamidethoxylate mit 20 Mol Ethylenoxid (Dispersogen^{®} MT 200, Fa. Clariant, Komponente (C)) |
| 4,0 | Teile | Glycerinethoxylat mit einem Molekulargewicht von 500 g/mol (Polyglykol G 500, Fa. Clariant, Komponente (F)), |
| 1,5 | Teile | NaOH, 10%ige Lösung (Neutralisierungsreagenz, Komponente (F)), |
| 0,3 | Teile | Entschäumer (Byk^{®} 18, Fa. Byk Chemie, Komponente (F)), |
| 0,2 | Teile | Konservierungsmittel (Acticide^{®} BS 20, Fa. Thor, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1.860 mPa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet. 8% Pigmentpräparation werden jeweils einer wässrigen Dispersionsweißfarbe und einem mineralölhaltigen Langöl-Alkydlack zugesetzt und nach Durchmischung auf einem Prüfkarton mit einer 120 µm Rakel aufgestrichen. Die Abtönungen sind farbstark und zeigen keinen Rubout.

### Beispiel 2 (Vergleichsbeispiel)

| | | |
|---|---|---|
| 65,0 | Teile | C.I. Pigment Yellow 42 (Bayferrox^{®} 3920, Fa. Lanxess, Komponente (A)), |
| 5,0 | Teile | 30% ige wässrige Lösung eines N-Lauroylsarcosids, Natriumsalz (Medialan^{®} LD, Fa. Clariant, (Komponente (B)), |
| 5,0 | Teile | Fettsäurealkanolamidethoxylate mit 20 Mol Ethylenoxid (Dispersogen^{®} MT 200, Fa. Clariant, Komponente (C)) |
| 4,0 | Teile | Glycerinethoxylat mit einem Molekulargewicht von 500 g/mol (Polyglykol G 500, Fa. Clariant, Komponente (F)), |
| 1,5 | Teile | NaOH, 10%ige Lösung (Neutralisierungsreagenz, Komponente (F)), |
| 0,3 | Teile | Entschäumer (Byk^{®} 18, Fa. Byk Chemie, Komponente (F)), |
| 0,2 | Teile | Konservierungsmittel (Acticide^{®} BS 20, Fa. Thor, Komponente (F)), |
| 19,0 | Teile | Wasser (Komponente (G)) |

Die Pigmentpräparation lässt sich anteigen und verflüssigen. Nach der Mahlung wird die Pigmentpräparation zu einem festen Kuchen.

### Beispiel 3

| | | |
|---|---|---|
| 70,0 | Teile | C.I. Pigment Black 11 (Bayferrox^{®} Black 316, Fa. Lanxess, |
| | | Komponente (A)), |
| 5,0 | Teile | Natriumhydrogen-N,N-dibutyl-10-(sulfonatooxy)octadecanamidat in wässriger Lösung (Humectol^{®} C fl hoko, Fa. Archroma, (Komponente (B)), |
| 5,0 | Teile | Fettsäurealkanolamidethoxylate mit 20 Mol Ethylenoxid (Dispersogen^{®} MT 200, Fa. Clariant, Komponente (C)) |
| 4,0 | Teile | Glycerinethoxylat mit einem Molekulargewicht von 500 g/mol (Polyglykol G 500, Fa. Clariant, Komponente (F)), |
| 1,5 | Teile | NaOH, 10%ige Lösung (Neutralisierungsreagenz, Komponente (F)), |
| 0,3 | Teile | Entschäumer (Byk^{®} 18, Fa. Byk Chemie, Komponente (F)), |
| 0,2 | Teile | Konservierungsmittel (Acticide^{®} BS 20, Fa. Thor, Komponente (F)), |
| 14,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 2.486 mPa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet. 8% Pigmentpräparation werden jeweils einer wässrigen Dispersionsweißfarbe und einem mineralölhaltigen Langöl-Alkydlack zugesetzt und nach Durchmischung auf einem Prüfkarton mit einer 120 µm Rakel aufgestrichen. Die Abtönungen sind farbstark und zeigen keinen Rubout.

### Beispiel 4

| | | |
|---|---|---|
| 70,0 | Teile | C.I. Pigment Green 17 (Chromoxid Grün, Fa. Lanxess, Komponente (A)), |
| 5,0 | Teile | Natriumhydrogen-N,N-dibutyl-10-(sulfonatooxy)octadecanamidat in wässriger Lösung (Humectol^{®} C fl hoko, Fa. Archroma, (Komponente (B)), |
| 5,0 | Teile | Fettsäurealkanolamidethoxylate mit 20 Mol Ethylenoxid (Dispersogen^{®} MT 200, Fa. Clariant, Komponente (C)) |
| 4,0 | Teile | Glycerinethoxylat mit einem Molekulargewicht von 500 g/mol (Polyglykol G 500, Fa. Clariant, Komponente (F)), |
| 1,5 | Teile | NaOH, 10%ige Lösung (Neutralisierungsreagenz, Komponente (F)), |
| 0,3 | Teile | Entschäumer (Byk^{®} 18, Fa. Byk Chemie, Komponente (F)), |
| 0,2 | Teile | Konservierungsmittel (Acticide^{®} BS 20, Fa. Thor, Komponente (F)), |
| 14,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1.190 mPa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet. 8% Pigmentpräparation werden jeweils einer wässrigen Dispersionsweißfarbe und einem mineralölhaltigen Langöl-Alkydlack zugesetzt und nach Durchmischung auf einem Prüfkarton mit einer 120 µm Rakel aufgestrichen. Die Abtönungen sind farbstark und zeigen keinen Rubout.

### Beispiel 5

| | | |
|---|---|---|
| 65,0 | Teile | C.I. Pigment Yellow 42 (Bayferrox^{®} Yellow 915, Fa. Lanxess, Komponente (A)), |
| 5,0 | Teile | Natriumhydrogen-N,N-dibutyl-10-(sulfonatooxy)octadecanamidat in wässriger Lösung (Humectol^{®} C fl hoko, Fa. Archroma, (Komponente (B)), |
| 5,0 | Teile | Fettsäurealkanolamidethoxylate mit 20 Mol Ethylenoxid (Dispersogen^{®} MT 200, Fa. Clariant, Komponente (C)) |
| 4,0 | Teile | Glycerinethoxylat mit einem Molekulargewicht von 500 g/mol (Polyglykol G 500, Fa. Clariant, Komponente (F)), |
| 1,5 | Teile | NaOH, 10%ige Lösung (Neutralisierungsreagenz, Komponente (F)), |
| 0,3 | Teile | Entschäumer (Byk^{®} 18, Fa. Byk Chemie, Komponente (F)), |
| 0,2 | Teile | Konservierungsmittel (Acticide^{®} BS 20, Fa. Thor, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 650 mPa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet. 8% Pigmentpräparation werden jeweils einer wässrigen Dispersionsweißfarbe und einem mineralölhaltigen Langöl-Alkydlack zugesetzt und nach Durchmischung auf einem Prüfkarton mit einer 120 µm Rakel aufgestrichen. Die Abtönungen sind farbstark und zeigen keinen Rubout.

### Beispiel 6

| | | |
|---|---|---|
| 65,0 | Teile | C.I. Pigment Yellow 42 (Bayferrox^{®} Yellow 915, Fa. Lanxess, Komponente (A)), |
| 5,0 | Teile | Natriumhydrogen-N,N-dibutyl-10-(sulfonatooxy)octadecanamidat in wässriger Lösung (Humectol^{®} C fl hoko, Fa. Archroma, (Komponente (B)), |
| 5,0 | Teile | Fettsäurealkanolamidethoxylate mit 20 Mol Ethylenoxid (Dispersogen^{®} MT 200, Fa. Clariant, Komponente (C)) |
| 4,0 | Teile | Glycerinethoxylat mit einem Molekulargewicht von 500 g/mol (Polyglykol G 500, Fa. Clariant, Komponente (F)), |
| 1,5 | Teile | NaOH, 10%ige Lösung (Neutralisierungsreagenz, Komponente (F)), |
| 0,3 | Teile | Entschäumer (Byk^{®} 18, Fa. Byk Chemie, Komponente (F)), |
| 0,2 | Teile | Konservierungsmittel (Acticide^{®} BS 20, Fa. Thor, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 560 mPa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet. 8% Pigmentpräparation werden jeweils einer wässrigen Dispersionsweißfarbe und einem mineralölhaltigen Langöl-Alkydlack zugesetzt und nach Durchmischung auf einem Prüfkarton mit einer 120 µm Rakel aufgestrichen. Die Abtönungen sind farbstark und zeigen keinen Rubout.

## Patentansprüche

1. Wässrige, bindemittelfreie Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens eines Salzes eines N,N-Dialkyl-(sulfooxy)-Fettsäureamids der Formel (I), 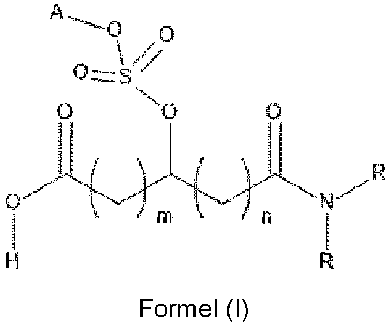 worin
R ein aliphatischer Kohlenwasserstoffrest mit 1 bis 8 Kohlenstoffatomen,
n eine ganze Zahl von 0 bis 15,
m eine ganze Zahl von 0 bis 15,
n + m eine ganze Zahl von 5 bis 19,
A ein Wasserstoffatom, ein Element der Erdalkalimetallgruppe oder Ammonium, und
(G) Wasser sind.

2. Wässrige, bindemittelfreie Pigmentpräparation nach Anspruch 1, in denen Komponente (B) Natriumhydrogen-N,N-dibutyl-10-(sulfonatooxy)octadecanamidat ist.

3. Wässrige, bindemittelfreie Pigmentpräparation nach Anspruch 1 und 2, enthaltend
(C) 0,01 - 12,0 Gew.-% eines nichtionischen Tensides ausgewählt aus der Gruppe der
Fettalkoholalkoxylate, insbesondere Fettalkoholethoxylate, Fettsäurederivate, insbesondere Fettsäureethoxylate und Fettsäurealkanolamidethoxylate,
Zuckertenside, insbesondere Alkylpolyglycoside und Polyhydroxyfettsäureamide, speziell Alkylglucamide, Ethoxylierungsprodukte von Fettsäuresorbitanestern, Rizinusöl,
Fettsäureglycerinester, und
Fettsäurepolyglycerinester.

4. Wässrige, bindemittelfreie Pigmentpräparation nach einem oder mehreren der Ansprüche 1 bis 3, enthaltend 10 bis 75 Gew.-% Wasser.

5. Wässrige, bindemittelfreie Pigmentpräparation nach einem oder mehreren der Ansprüche 1 bis 4, welche eine Viskosität von 10 bis 10.000 mPas, bestimmt mit einem Kegel-Platte Viskosimeter bei einer Scherrate von 1/60 sec⁻¹, aufweist.

6. Wässrige, bindemittelfreie Pigmentpräparationen nach einem oder mehreren der Ansprüche 1 bis 5, enthaltend
(D) 0,01 - 8,0 Gew.-% Tonmineralverdicker ausgewählt aus natürlichen oder alkalisch aktivierten Schichtsilikatmineralien.

7. Wässrige, bindemittelfreie Pigmentpräparationen nach einem oder mehreren der Ansprüche 1 bis 6, enthaltend
(E) 0,01 - 20,0 Gew.-% anorganische Füllstoffe.

8. Wässrige, bindemittelfreie Pigmentpräparationen nach einem oder mehreren der Ansprüche 1 bis 7, enthaltend
(F) weitere, für die Herstellung von wässrigen, bindemittelfreien Pigmentpräparationen übliche Hilfsmittel ausgewählt aus Netzmitteln, Feuchthaltemitteln, Lösemitteln, Entschäumern, Rheologieadditiven, Konservierungsmitteln, Puffersubstanzen und pH-Regulatoren.

9. Wässrige, bindemittelfreie Pigmentpräparation nach Anspruch 8, enthaltend bis zu 15 Gew.-% mindestens eines Feuchthalte- oder Lösemittels, ausgewählt aus Glykolethern mit 200 bis 20.000 g/mol zahlenmittlerem Molekulargewicht.

10. Wässrige, bindemittelfreie Pigmentpräparation nach Anspruch 8 und/oder 9, enthaltend bis zu 2 Gew.-% Entschäumer.

11. Wässrige, bindemittelfreie Pigmentpräparation nach einem oder mehreren der Ansprüche 7 bis 10, enthaltend bis zu 1 Gew.-% eines Konservierungsmittels.

12. Verwendung einer wässrigen, bindemittelfreien Pigmentpräparation nach einem oder mehreren der Ansprüche 1 bis 11 zum Einfärben von makromolekularen Materialien, Beschichtungsstoffen, Lacken und Farben, und ihre Verwendung zum Bedrucken von zweidimensionalen Flächengebilden.
